# EUROPEAN PATENT APPLICATION

(11) **EP 3 425 115 A1**
(43) Date of publication of application: **09.01.2019**
(21) Application number: 18189456.9
(22) Date of filing: 31.08.2016
(51) Int. Cl.: E01F 13/04, E01F 13/12

(54) **SYSTEM OF INSPECTING VEHICLE AND METHOD OF OPERATING THE SAME**

(30) Priority: 28.07.2016 KR 20160096175; 28.07.2016 KR 20160096186
(62) Divisional of application: 16186626.4
(71) Applicant: Hizen Co., Ltd., Daejeon 34025 (KR)
(72) Inventor: LEE, Myong Sick, 34316 Daejeon (KR)
(74) Representative: Isarpatent

(57) **Abstract**

System for inspecting a vehicle including a first tire damaging portion (4a) mounted at a ground of an exit portion of a first inspection road to be movable upward or downward and damaging a tire of an inspected vehicle; a first blocking portion (5a) positioned next to the first tire damaging portion and being movable upward or downward; a vehicle identifying portion (1) acquiring and outputting identification information on the inspected vehicle positioned on the first inspection road; a driver identifying portion acquiring and outputting bio-information on a driver of the inspected vehicle; a control portion connected to the vehicle identifying portion and the driver identifying portion; and a database connected to the control portion, wherein the control portion, when the identification information output and transmitted from the vehicle identifying portion is the same as identification information stored in the database or the bio-information output and transmitted from the driver identifying portion is the same as bio-information stored in the database, controls the first tire damaging portion and the first blocking portion to move downward under the ground such that the inspected vehicle positioned on the first inspection road leave the first inspection road.

## Description

### BACKGROUND OF THE INVENTION

### (a) Field of the Invention

The present invention relates to a protection device against vehicle, a system of inspecting a vehicle and a method of operating the system.

### (b) Description of the Related Art

Entering and leaving vehicles and occupants in the vehicles are checked and inspected (hereinafter, it will be called 'inspection') in security-enhanced buildings. Barricades for temporarily stopping vehicles are mounted at a region where the inspection is executed.

Such barricades blocks does not impede getaway of vehicles quickly during inspection and inspectors who block getaway vehicles run a risk of being injured.

Since an inspector himself inspects a vehicle, explosion accidents cannot be prevented in advance or damages due to explosion cannot be reduced. In addition, fragments may be scattered in explosion. Damage of human life and collapse of buildings may occur due to the fragments.

### [Prior Art Document]

### [Patent Document]

(Patent Document 1) Korean Patent Laid-Open Publication No. 10-2006-0101153 (2006.09.22.)

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a system of inspecting a vehicle and a method of operating the system having advantages of isolating and inspecting an entering vehicle and preventing fragments from being scattered if explosion occurs during inspection.

Another embodiment of the present invention provides a system of inspecting a vehicle and a method of operating the system having advantages of inspecting the vehicle precisely.

A protection device against vehicle according to an exemplary embodiment of the present invention may include: a base portion on which the vehicle is positioned; a protecting portion disposed along a perimeter of the base portion and positioned under the base portion; and a driving portion configured to lift up or fall down the base portion or the protecting portion.

The protection device against vehicle may further include a frame portion supporting the base portion and the protecting portion.

The driving portion may include: a plurality of lead ball screws connected to the base portion or the protecting portion; and a motor operably connected to the plurality of lead ball screws.

The protecting portion may include: a horizontal frame connected to a ball nut of the lead ball screw; a plurality of vertical frames disposed vertically from edges of the horizontal frame; and protection walls coupled to the plurality of vertical frames.

The protection walls may include a plurality of impact absorbing panels disposed between neighboring vertical frames.

Each of the impact absorbing panels may include: first and second impact absorbing layers disposed apart from each other; an impact dispersing layer disposed between the first and second impact absorbing layers; a shatter-proof layer disposed at both sides of the impact dispersing layer; and a coupling layer coupling the first impact absorbing layer, the impact dispersing layer, the shatter-proof layer and the second impact absorbing layer with each other.

The protection walls may further include a shatter-proof panel disposed at an exterior of the plurality of impact absorbing panels and the vertical frame.

The shatter-proof panel may include: a plurality of shatter-proof layers having elastically reinforcing force and preventing the impact absorbing panel from being shattered; and a coupling layer disposed between the plurality of shatter-proof layers and coupling the neighboring shatter-proof layers with each other.

The driving portion may further include a plurality of supporting bars disposed in parallel with the lead ball screw and guiding the base portion or the protecting portion which lifts up or falls down.

A system of inspecting a vehicle according to an exemplary embodiment of the present invention may include: a first tire damaging portion mounted at a ground of an exit portion of a first inspection road to be movable upward or downward and damaging a tire of an inspected vehicle; a first blocking portion positioned next to the first tire damaging portion and being movable upward or downward; a vehicle identifying portion acquiring and outputting identification information on the inspected vehicle positioned on the first inspection road; a driver identifying portion acquiring and outputting bio-information on a driver of the inspected vehicle; a control portion connected to the vehicle identifying portion and the driver identifying portion; and a database connected to the control portion, wherein the control portion, when the identification information output and transmitted from the vehicle identifying portion is the same as identification information stored in the database or the bio-information output and transmitted from the driver identifying portion is the same as bio-information stored in the database, controls the first tire damaging portion and the first blocking portion to move downward under the ground such that the inspected vehicle positioned on the first inspection road leave the first inspection road.

The vehicle identifying portion may be a tag reader which communicates with the inspected vehicle and receives the identification information from the inspected vehicle or an image acquisition device which photographs a license plate of the inspected vehicle and acquires an image of the license plate.

The bio-information acquired by the driver identifying portion may include at least one of a face image, a fingerprint image and an iris image of the driver.

The system may further include: a protection device against vehicle positioned on a second inspection road formed in a row with the first inspection road, wherein protection walls positioned under the second inspection road are lifted up and enclose the inspected vehicle or the protection device falls the inspected vehicle down into an underground space formed under the second inspection road; and a detecting portion of vehicle entering vehicle stop position which detects whether the inspected vehicle is positioned on a vehicle stop position of the second inspection road and outputs a detection signal corresponding thereto, wherein the control portion, if the inspected vehicle is determined to be positioned on the vehicle stop position of the second inspection road, lifts the protection walls of the protection device against vehicle to enclose the inspected vehicle or falls the inspected vehicle down into the underground space formed under the second inspection road.

The system may further include: an acquisition portion of vehicular lower image connected to the control portion, disposed between the first inspection road and the second inspection road, and acquiring and outputting a lower image of the inspected vehicle; an acquisition portion of vehicular inner image connected to the control portion and acquiring and outputting an inner image of the inspected vehicle; and a detecting portion of vehicular inner state connected to the control portion, detecting whether an explosive exists in the inspected vehicle, and outputting a detection signal corresponding thereto, wherein the control portion, if the lower image acquired by the acquisition portion of vehicular lower image exists in the database, the inner image acquired by the acquisition portion of vehicular inner image is different from an image of a dangerous object stored in the database, and the explosive in the vehicle is not detected by the detecting portion of vehicular inner state, releases operation of the protection device against vehicle and reinstates the protection device against vehicle to an initial state so as to fall down the protection walls or lift up the inspected vehicle that was fallen down.

The acquisition portion of vehicular inner image may be a 3-dimensional x-ray scanner which is positioned between the first inspection road and the second inspection road or a thermo-graphic camera positioned close to the second inspection road.

The system may further include: a second tire damaging portion mounted at a ground of an exit portion of the second inspection road to be movable upward or downward and damaging the tire of the inspected vehicle; and a second blocking portion positioned next to the second tire damaging portion and being movable upward or downward, wherein the control portion, when the protection device against vehicle is reinstated to the initial state, controls the second tire damaging portion and the second blocking portion to move downward under the ground such that the inspected vehicle positioned on the second inspection road leave the second inspection road.

The system may further include an acquisition portion of vehicular position information connected to the control portion and being mountable at the inspected vehicle.

The system may further include a communication portion connected to the control portion, wherein the control portion transmits an inspection result of the inspected vehicle to an external terminal through the communication portion.

A method of operating a system of inspecting a vehicle according to an exemplary embodiment of the present invention may include: reading identification information output and transmitted from a vehicle identifying portion; determining whether the identification information is the same as identification information stored in a storage medium; moving a first tire damaging portion and a first blocking portion downward under a ground and causing an inspected vehicle positioned on a first inspection road to leave the first inspection road if the identification information output from the vehicle identifying portion is the same as the identification information stored in the storage medium; reading, if the identification information output from the vehicle identifying portion is different from the identification information stored in the storage medium, bio-information of a driver output from a driver identifying portion, determining whether the identified bio-information of the driver is the same as bio-information of the driver stored in the storage medium; and moving the first tire damaging portion and the first blocking portion downward under the ground and causing the inspected vehicle positioned on the first inspection road to leave the first inspection road if the identified bio-information of the driver is the same as the bio-information of the driver stored in the storage medium.

The method may further include: determining whether the inspected vehicle is positioned on a vehicle stop position of a second inspection road by reading a detection signal output from a detecting portion of vehicle entering vehicle stop position; and operating protection walls of a protection device against vehicle to enclose the inspected vehicle or falling the inspected vehicle down into an underground space formed under the ground if the inspected vehicle is positioned on the vehicle stop position of the second inspection road.

The method may further include: reading a lower image of the inspected vehicle output from an acquisition portion of vehicular lower image; determining whether a lower image which is the same as the lower image exists in the storage medium; reading an inner image of the inspected vehicle output from an acquisition portion of vehicular inner image; determining whether the inner image is the same as an image of a dangerous object stored in the storage medium; reading a detection signal output from a detecting portion of vehicular inner state and determining whether an explosive is detected in the inspected vehicle; and releasing operation of the protection device against vehicle so as to fall down the protection walls of the protection device against vehicle or lift up the inspected vehicle that was fallen down if the lower image which is the same as the lower image acquired by the acquisition portion of vehicular lower image exits in the storage medium, the inner image of the inspected vehicle acquired by the acquisition portion of vehicular inner image is different from the image of the dangerous object, and the explosive is not detected in the inspected vehicle.

The method may further include moving a second tire damaging portion and a second blocking portion downward under the ground and causing the inspected vehicle positioned on the second inspection road to leave the second inspection road if the operation of the protection device against vehicle is released where the inspected vehicle positioned on the second inspection road is enclosed by the protection walls or is fallen down into a protecting space.

The method may further include attaching an acquisition portion of vehicular position information on a lower portion of the inspected vehicle.

The method may further include transmitting an inspection result of the inspected vehicle to an external terminal through a communication portion.

According to an exemplary embodiment of the present invention, the protecting portion is lifted up and the protection walls encloses around the inspected vehicle if the inspected vehicle enters an inspection position. Therefore, if the inspected vehicle is exploded during the inspection, fragments of the exploded vehicle may not be scattered by the protection walls. Therefore, damage of human life and collapse of buildings due to the fragments of the exploded vehicle may be prevented.

According to an exemplary embodiment of the present invention, inspection of the inspected vehicle is executed automatically. If the vehicle is determined to be a dangerous vehicle, movement of the vehicle may be limited and getaway of the vehicle may be prevented. Therefore, accidents by the getaway vehicle may be prevented during the inspection.

### BRIEF DESCRIPTION OF THE DRAWINGS

FIG. 1 is a schematic diagram of a system of inspecting a vehicle according to an exemplary embodiment of the present invention.
FIG. 2 is a schematic diagram of a tire damaging portion in FIG. 1.
FIG. 3 is a schematic diagram of a blocking portion in FIG. 1.
FIG. 4 illustrates a protecting portion of a protection device against vehicle in FIG. 1 is lifted up.
FIG. 5 is a perspective view of a protection device against vehicle in FIG. 4.
FIG. 6 is an exploded perspective view of a protection device against vehicle in FIG. 4.
FIG. 7 is a partial enlarged view of A portion in FIG. 6.
FIG. 8 is a partial enlarged view of B portion in FIG. 6.
FIG. 9 is a partial enlarged view of C portion in FIG. 6.
FIG. 10 is a cross-sectional view taken along a line X-X in FIG. 5.
FIG. 11 is a cross-sectional view taken along a line XI-XI in FIG. 10.
FIG. 12 is a partial enlarged view of D portion in FIG. 11.
FIG. 13 is a perspective view of a driving portion in FIG. 6.
FIG. 14 is a cross-sectional view illustrating a coupled state of a driving portion and a main frame in FIG. 6.
FIG. 15 is a schematic diagram of a system of inspecting a vehicle according to another exemplary embodiment of the present invention.
FIG. 16 is a block diagram of an operating system for a system of inspecting a vehicle according to an exemplary embodiment of the present invention.
FIG. 17 to FIG. 19 are flowcharts of a method of operating a system of inspecting a vehicle according to an exemplary embodiment of the present invention.

### <Description of symbols>

1: first inspecting portion 2: second inspecting portion
200: protection device against vehicle
210: frame portion
220: protecting portion 220a: isolation space
230: protection wall 240: driving portion
250: pedestal 260: base portion
24: mounting portion 3: inspection road configuration
4a, 4b: first and second tire damaging portions
5a, 5b: first and second blocking portions
6: gate

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. Like reference numerals designate like elements throughout the specification.

A protection device against vehicle according to an exemplary embodiment of the present invention can be applied to a system of inspecting a vehicle according to an exemplary embodiment of the present invention. A system of inspecting a vehicle using a protection device against vehicle will hereinafter be described.

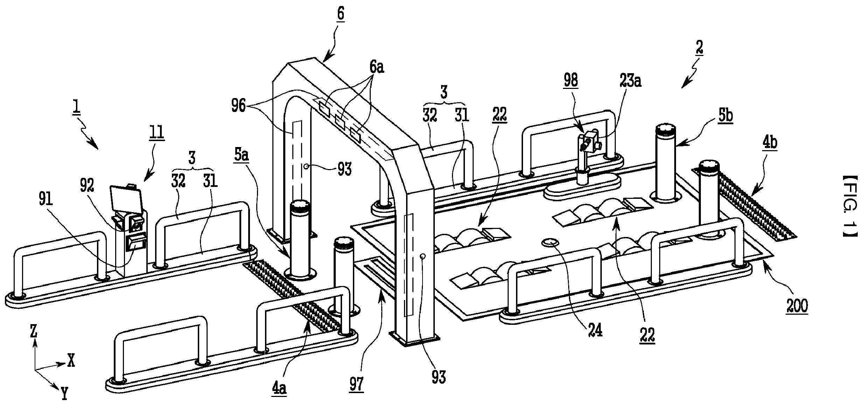

A system of inspecting a vehicle according to an exemplary embodiment of the present invention will be described with reference to FIG. 1.

FIG. 1 is a schematic diagram of a system of inspecting a vehicle according to an exemplary embodiment of the present invention.

Referring to FIG. 1, a system of inspecting a vehicle according to the present exemplary embodiment includes a first inspecting portion 1, a second inspecting portion 2, a gate 6, an acquisition portion of vehicular lower image 97 and an acquisition portion of vehicular inner image 96. The system inspects a vehicle entering a building and occupants of the vehicle and is configured to prevent damage of human life and protect surrounding buildings due to fragments that are scattered when the vehicle is exploded during inspection.

Each of the first inspecting portion 1 and the second inspecting portion 2 includes an inspection road configuration 3, first and second tire damaging portions 4a and 4b and first and second blocking portions 5a and 5b.

The first inspecting portion 1 and the second inspecting portion 2 are arranged in one direction. The first inspecting portion 1 is configured to check the entering vehicle and inspect identities of the occupants, and the second inspecting portion 2 inspects explosives and dangerous substances mounted in the vehicle.

The first inspecting portion 1 includes a checking portion 11.

The checking portion 11 includes a housing, a vehicle identifying portion 91 disposed at the housing and identifying the vehicle, a driver identifying portion 92 identifying a driver driving the vehicle, a monitor for checking the identified image, a calling unit for calling managers, an intercom for calling the managers, and a sensor for detecting a position of the vehicle. The checking portion 11 may further include an iris photographing portion and a fingerprint photographing portion.

The identifying portions 91 and 92 may be cameras for photographing objects.

The checking portion 11 may be connected to a control portion (not shown) in a management office (not shown). The control portion may receive images and compare the images with registered data.

Since a well-known security system can be used as the checking portion, detailed description thereof will be omitted.

The inspection road configuration 3 includes a bump 31 and a blocking bar 32 and is disposed a both sides in a width direction of the first inspecting portion 1 and the second inspecting portion 2.

The inspection road configuration 3 separates an inspection road from a pedestrian road and prevents the inspected vehicle from changing a moving direction and getting away to the width direction of the inspection road. A first inspection road is formed at the first inspecting portion 1 and a second inspection road is formed at the second inspecting portion 2 by the inspection road configuration 3.

The bump 31 is protruded from a ground by a predetermined height and is formed by concrete, block, etc. The bump 31 has a predetermined length. The bumps 31 are disposed apart from each other in Y (width) direction and X (length) direction. The bumps 31 are so spaced from each other in the width direction that the vehicle can move between the bumps 31. The checking portion 11 is mounted at the bump 31 positioned at one side in the width direction. The checking portion 11 may be mounted at the bump 31 positioned at the other side in the width direction according to a position of driver's seat.

The blocking bar 32 is disposed on an upper surface of the bump 31 along the length direction of the bump 31. The blocking bar 32 prevents the vehicle from changing the moving direction and getting away by crossing the bump 31.

Meanwhile, the bump 31 or the blocking bar 32 may be removed in another exemplary embodiment. If the bump 31 is removed, the blocking bar 32 may be mounted on the ground. However, both of the bump 31 and the blocking bar 32 may be removed.

The first tire damaging portion 4a is mounted at the ground of an exit portion of the first inspection road. The second tire damaging portion 4b is mounted at the ground of an exit portion of the second inspection road. The first and second tire damaging portions 4a and 4b damage a tire of the vehicle which gets away in the moving direction during the inspection.

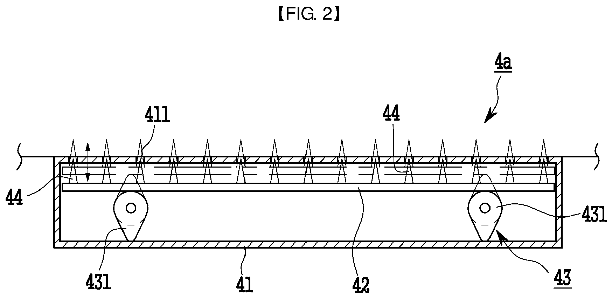

Referring to FIG. 2, the first tire damaging portion 4a includes a housing 41, a needle panel 42, an up/down driving portion 43 and a needle 44. In FIG. 1, the first tire damaging portion 4a is evenly disposed in the Y direction. However, a plurality of first tire damaging portions 4a may be disposed apart from each other in the Y direction.

An inside of the housing 41 is empty and a plurality of needle holes 411 which is connected to the inside of the housing 41 is formed at an upper surface of the housing 41. The housing 41 is buried on the ground. The upper surface of the housing 41 is on the same plane as the ground. However, the housing 41 may not be buried on the ground and the upper surface of the housing may be above the ground.

The needle panel 42 has a predetermined width and is disposed to be movable upward or downward in the housing 41. A guide (not shown) for guiding the needle panel 42 so as to move upward or downward straightly may be disposed between the needle panel 42 and the housing 41.

The up/down driving portion 43 includes a cam 431 and a motor (not shown), is disposed between the needle panel 42 and a bottom surface in the housing 41, and lifts up or falls down the needle panel 42.

A plurality of cams 431 may be disposed and be operably connected to a shaft (not shown). At least a portion of the cam 431 contacts with a lower surface of the needle panel 42. The needle panel 42 can move upward or downward according to rotation of the cam 431.

The motor is operably connected to the shaft. Power of the motor is transmitted to the cam 431 through the shaft. Meanwhile, a plurality of motors may be used and each motor may be connected to each cam 431. The motor is connected to the control portion and may be operated according to a signal of the control portion.

In FIG. 2 and above description, it is illustrated that the up/down driving portion 43 includes the cam, the motor, and the shaft. However, the up/down driving portion 43 may be an electric cylinder, an actuator using gas or oil as operating fluid, or X-links where two bars are intersects with each other in X shape.

A plurality of needles 44 is disposed apart from each other on an upper surface of the needle panel 42 and is exposed to the exterior of the housing 41 through the plurality of needle holes 411 if the needle panel 42 moves upwardly. The needle 44 is sharp at the end and is made of metal having sufficient rigidity.

If the vehicle passes the tire damaging portion 4a in a state that the needle 44 is exposed to the exterior of the housing 41, tires of the vehicle may be damaged.

Meanwhile, the tire damaging portion 4a may further include a pump (not shown) disposed in the housing 41. The pump may drain rainwater and wastewater flowing into the housing 41 out the housing 41. In addition, a bottom surface of the housing 41 may be slanted to drain the rainwater and the wastewater naturally.

Electrical leakage and malfunction of the needle panel 42 and the up/down driving portion 43 disposed in the housing 41 due to the rainwater and the wastewater may be prevented by draining the rainwater and the wastewater out the housing 41.

Referring to FIG. 1, the second tire damaging portion 4b includes a housing, a needle panel, an up/down driving portion and a needle. Since the housing, the needle panel, the up/down driving portion and the needle of the second tire damaging portion 4b are the same as those 41, 42, 43 and 44 of the first tire damaging portion 4a, detailed description thereof will be omitted.

Meanwhile, it is illustrated that the second tire damaging portion 4b is mounted on the ground apart from the protection device against vehicle 200, but the second tire damaging portion 4b may be mounted on the protection device against vehicle 200.

The first and second tire damaging portions 4a and 4b cause the needles 44 to protrude out of the housing 41 if the vehicle stops on an inspection position and cause the needle 44 to get in the housing 41 if an inspection result is normal.

The tire damaging portions 4a and 4b may be removed according to another exemplary embodiment.

The first blocking portion 5a is disposed at the exit portion of the first inspection road and the second blocking portion 5b is disposed at the exit portion of the second inspection road.

The first and second blocking portions 5a and 5b are positioned in the neighborhood with the first and second tire damaging portions 4a and 4b and are arranged along the X direction. The first and second blocking portions 5a and 5b prevents the inspected vehicle to move to next stages.

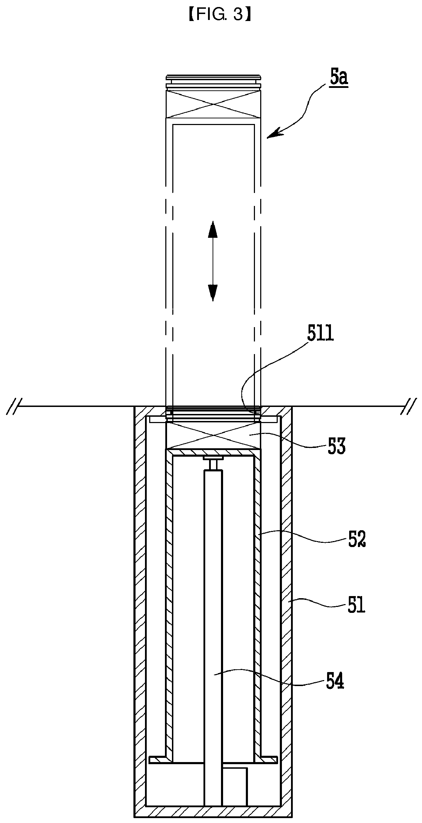

Referring to FIG. 3, the first blocking portion 5a includes a housing 51, an up/down member 52 and an up/down driving portion 54.

An inside of the housing 51 is empty and a draw-out hole 511 which is connected to the inside of the housing 51 is formed at an upper surface of the housing 51. The housing 51 may be buried on the ground and the upper surface of the housing 51 is on the same plane as the ground.

The up/down member 52 is disposed in the housing 51 to be movable upward or downward. A guide (not shown) for guiding the up/down member 52 so as to move upward or downward straightly may be disposed between the up/down member 52 and an interior surface of the housing 51. It is illustrated in FIG. 1 and FIG. 3 that the up/down member 52 has a circular cylinder shape, but the shape of the up/down member 52 may be variously changed according to design scheme.

A lamp module 53 for serving as a signal light is disposed at an upper portion of the up/down member 52.

The up/down driving portion 54 is disposed in the housing 51 and is connected to the control portion so as to move the up/down member 52 upward or downward according to a signal of the control portion. The up/down driving portion 54 may be an electric cylinder or an actuator using gas or oil as operating fluid. Structures of the up/down driving portion 54 may be variously changed according to design scheme.

The blocking portion 5a may further include a pump (not shown) disposed in housing 51. The pump may drain rainwater and wastewater flowing into the housing 51 out the housing 51. In addition, a bottom surface of the housing 51 may be slanted to drain the rainwater and the wastewater naturally.

Electrical leakage and malfunction of the up/down member 52 and the up/down driving portion 54 disposed in the housing 51 due to the rainwater and the wastewater may be prevented by draining the rainwater and the wastewater out the housing 51.

Referring to FIG. 1, the second blocking portion 5b includes a housing, an up/down member and an up/down driving portion. Since the housing, the up/down member and the up/down driving portion of the second blocking portion 5b are the same as those 51, 52 and 54 of the first blocking portion 5a, detailed description thereof will be omitted.

Meanwhile, it is illustrated that the second blocking portion 5b is positioned at the protection device against vehicle 200, but the second blocking portion 5b may be mounted on the ground apart from the protection device against vehicle 200.

The first and second blocking portions 5a and 5b, such as the first and second tire damaging portions 4a and 4b do, cause the up/down member 52 to move upward if the vehicle stops on the inspection position and cause the up/down member 52 to move downward if the inspection result is normal.

The blocking portion 5a and 5b may be removed according to another exemplary embodiment.

The gate 6 is positioned between the first inspecting portion 1 and the second inspecting portion 2 and forms a passage on which the vehicle passing through the first inspecting portion 1 moves. A lamp module 6a connected to the control portion and serving as a signal light is disposed at the gate 6.

The acquisition portion of vehicular inner image 96 is disposed at the gate 6 and is connected to the control portion. The acquisition portion of vehicular inner image 96 is configured to acquire an inner image of the vehicle passing through the first inspecting portion 1 and may be 3-dimensional x-ray scanner or a thermo-graphic camera. A control center may easily check the number of occupants and luggage by photographing an inside of the vehicle. The acquisition portion of vehicular inner image 96 may be removed according to another exemplary embodiment.

The acquisition portion of vehicular lower image 97 is mounted on the ground between the first inspecting portion 1 and the second inspecting portion 2 and is connected to the control portion. The acquisition portion of vehicular lower image 97 is configured to acquire a lower image of the vehicle and is a 2-dimensional scanner.

The control portion may compare the image acquired by the acquisition portion of vehicular lower image 97 with stored data. The stored data may be an original lower image according to a vehicle model. That is, changes of lower structures of the inspected vehicle and hidden objects may be checked by comparing the lower image of the inspected vehicle with a lower image of the same model. The acquisition portion of vehicular lower image 97 may be removed according to another exemplary embodiment.

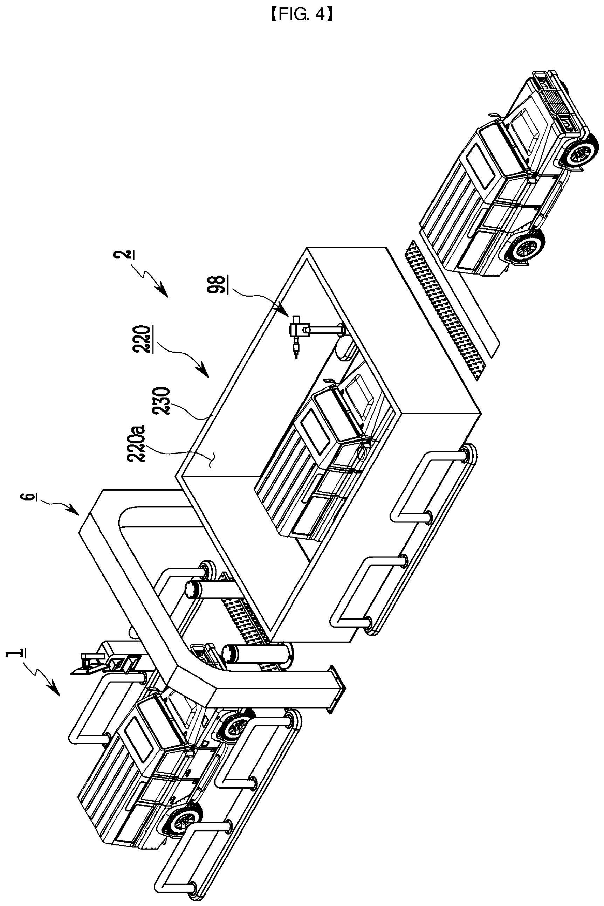

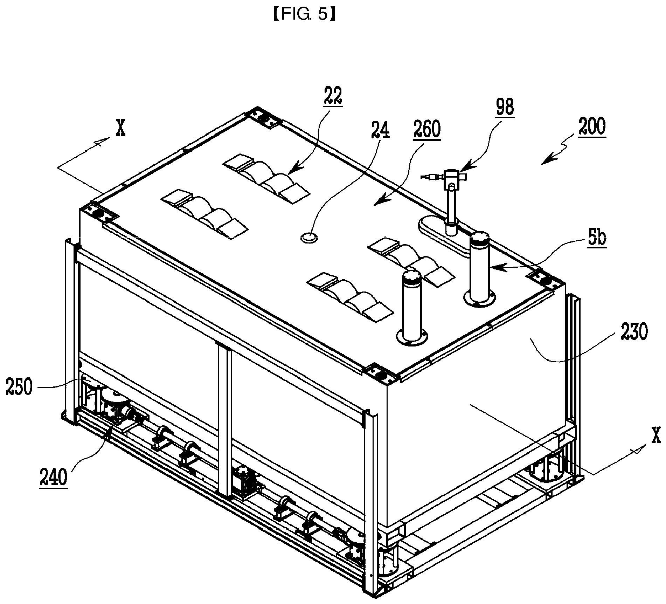

Referring to FIG. 4 and FIG. 5, the second inspecting portion 2 further includes the protection device against vehicle 200, a getaway preventing portion 22, a detecting portion of vehicular inner state 98 and a mounting portion 24, and may detect and inspect smell in the vehicle passing through the first inspecting portion 1.

The protection device against vehicle 200 includes a frame portion 210, a protecting portion 220, a driving portion 240 and a base portion 260, and may isolate the inspected vehicle. The protection device against vehicle 200 is disposed above an underground space (not shown) formed in a predetermined depth from the ground, and the protecting portion 220 is operated to form an isolation space 220a enclosing the vehicle when the vehicle is inspected.

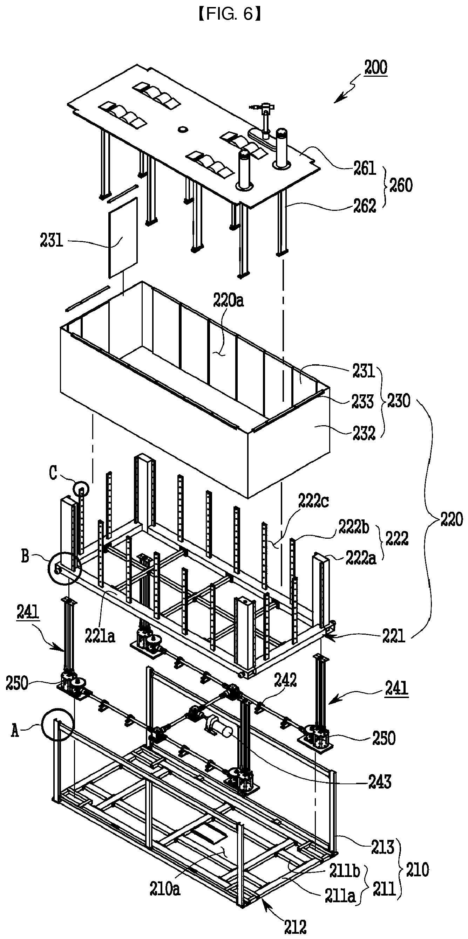

Referring to FIG. 6, the frame portion 210 includes a floor member 211 and post members 213, and the floor member 211 and the post members 213 are combined to form a mounting space 210a. The frame portion 210 may be buried on the ground of the second inspecting portion 2. The frame portion 210 may not be exposed from the ground.

The floor member 211 includes at least one longitudinal bar 211a and at least one transversal bar 211b, and the at least one longitudinal bar and the at least one transversal bar are connected with each other to form a floor frame 212. It is illustrated in the above description and FIG. 6 that the floor member 211 is formed by connecting the longitudinal bar and the transversal bar, but a panel having predetermined area may be used as the floor member 211.

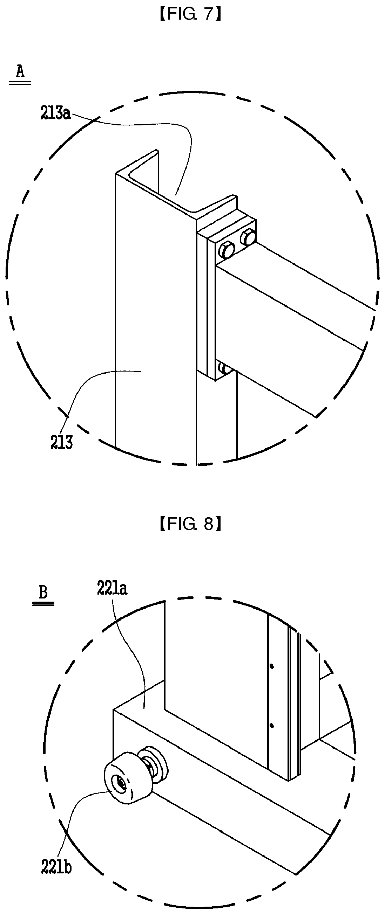

The post members 213 are disposed apart from each other along a perimeter of the floor frame 212 and are disposed perpendicular to an upper surface of the floor member 211. The neighboring post members 213 are connected with each other through a connection bar so as to be reinforced. The post member 213 has a predetermined length and is formed of a rail recess 213a (please see FIG. 7) in a vertical (length) direction.

The protecting portion 220 includes at least one horizontal frame 221, at least one vertical frame 222 and protection walls 230, and is disposed around the mounting space 210a. If the inspected vehicle enters the protection device against vehicle 200, the protecting portion 220 rises and encloses the vehicle so as to form the isolation space 220a.

The horizontal frame 221 includes at least one transversal bar and at least one longitudinal bar, and the at least one transversal bar and the at least one longitudinal bar are connected with each other so as to form a protection floor 221a. A panel having a predetermined area may be used as the horizontal frame 221. The protection floor 221a is disposed on the floor frame 212 and is movable upward or downward along the post members 213.

Edges of the protection floor 221a faces the post member 213 and a roller 221b (please see FIG. 8) inserted in the rail recess 213a is coupled to each edge of the protection floor 221a. The roller 221b slides along the rail recess 213a so as to move the horizontal frame 221 upward or downward straightly when the protection floor 221a moves upwardly or downwardly. The roller 221b may be removed according to another exemplary embodiment. An LM guide may be disposed between the post member 213 ad the horizontal frame 221.

The vertical frames 222 have predetermined length and are disposed along a perimeter of the protection floor 221a. The vertical frames are disposed perpendicular to an upper surface of the protection floor 221a. The vertical frames 222 are disposed at the edges of the protection floor 221a and are spaced from and face the post members 213. The vertical frames 222 include hollow main frames 222a and sub frames 222b disposed apart from each other between the neighboring main frames 222a.

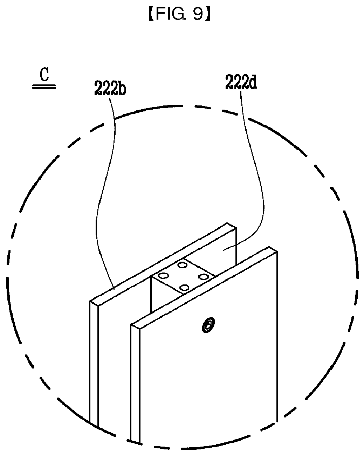

Since the sub frames 222b are disposed apart from each other, a disposing space 222c is formed between the neighboring sub frames 222b. Inserting recesses 222d (please see FIG. 9) are formed at both sides of the sub frame 222b in a length direction.

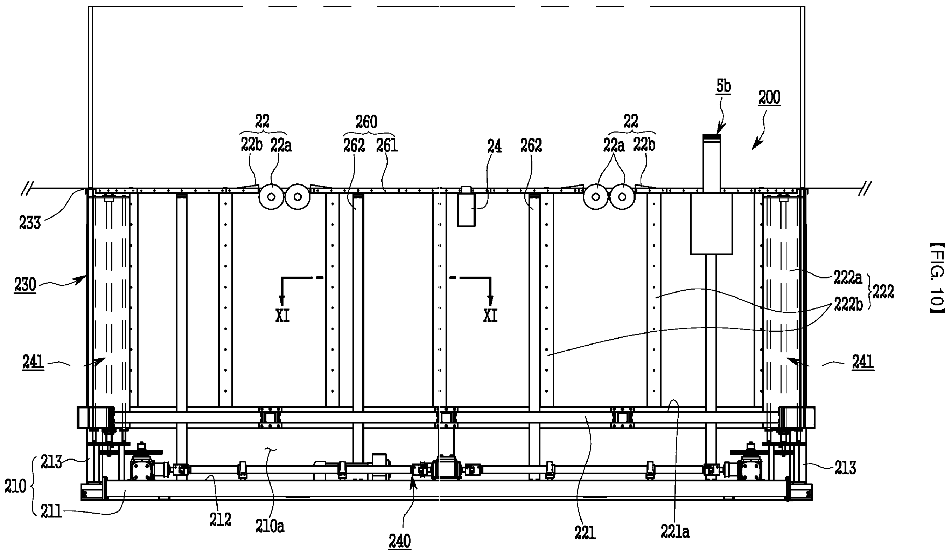

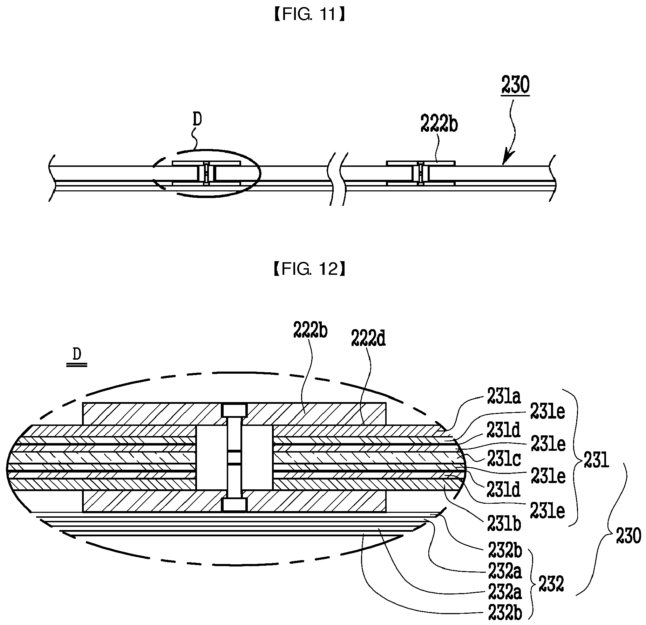

Referring to FIG. 10 to FIG. 12, the protection wall 230 includes an impact absorbing panel 231, a shatter-proof panel 232 and a cover 233, and prevents fragments from being scattered when the inspected vehicle is exploded in the isolation space 220a.

The impact absorbing panel 231 includes a first impact absorbing layer 231a, a second impact absorbing layer 231b, an impact dispersing layer 231c, a shatter-proof layer 231d and a coupling layer 231e. Each impact absorbing panel 231 is positioned in each disposing space 222c and both ends of the impact absorbing panel 231 are fitted into the inserting recesses 222d.

The first impact absorbing layer 231a and the second impact absorbing layer 231b have predetermined thickness. The first impact absorbing layer 231a faces and is apart from the second impact absorbing layer 231b. The first impact absorbing layer 231a and the second impact absorbing layer 231b are made of polycarbonate.

Polycarbonate is one type of thermoplastic resins and is impact-resistant, thermostable, weather-resistant, self-extinguishable, and transparent. Impact-resistance of polycarbonate is 150 times higher than that of tempered glass. In addition, polycarbonate has enhanced flexibility and machinability.

The first impact absorbing layer 231a forms an inner perimeter of the isolation space 220a and the second impact absorbing layer 231b forms an outer shape of the impact absorbing panel 231. Positions of the first impact absorbing layer 231a and the second impact absorbing layer 231b may be changed with each other.

The first impact absorbing layer 231a and the second impact absorbing layer 231b can absorb impact due to explosion in the isolation space 220a.

The impact dispersing layer 231c is formed by continuously connecting blocks having a predetermined size with each other. The impact dispersing layer 231c is positioned between the first impact absorbing layer 231a and the second impact absorbing layer 231b and has predetermined thickness.

The impact dispersing layer 231c is made of alumina.

Alumina is oxide of aluminum. Alumina as well as silica is very important material in ceramics. A melting point of alumina is 2,050° C and alumina has the next highest rigidity to diamond. Pure alumina is an insulator.

Since alumina satisfies characteristics required in ceramics such as thermostability, chemical resistance, and rigidity and is cheap, alumina is the most used in the world.

Spark plugs of vehicles, boards for ICs, packing materials, abrasives, and grinders are made from alumina. Single crystal of alumina into which a little chrome oxides is added is ruby. Ruby is used as an ornament and a basic material of laser.

Alumina ceramics which is a sintered body of alumina is used in a field of industry. Alumina fiber manufactured by heat-treating alumina in a fiber phase is a popular refractories or fiber reinforced composite.

Ruby, sapphire, and corundum is kinds of pure alumina and rigidity of ruby, sapphire, and corundum is similar to that of diamond.

If impact is applied to the first impact absorbing layer 231a due to explosion in the isolation space 220a, the impact dispersing layer 231c is broken and disperses the impact.

The shatter-proof layers 231d are positioned between the first impact absorbing layer 231a and the impact dispersing layer 231c and between the second impact absorbing layer 231b and the impact dispersing layer 231c, and are coupled to the first impact absorbing layer 231a, the impact dispersing layer 231c and the second impact absorbing layer 231b through the coupling layers 231 e.

The shatter-proof layer 231d may be made of aramid fiber. Aramid fiber has excellent tensile strength, toughness and thermostability and has high strength and high elasticity. The aramid fiber cannot be burnt down nor melted and be carbonized to be black at a temperature higher than 500° C. Aramid does not extend if force is applied thereto. Therefore, aramid is the best plastic reinforcing member.

The shatter-proof layer 231d elastically reinforces the impact dispersing layer 231c using tensile strength and prevents fragments of the first impact absorbing layer 231a, the second impact absorbing layer 231b and the impact dispersing layer 231c from being scattered when explosion occurs.

The coupling layers 231e are disposed at both sides of the shatter-proof layers 231d, attach the shatter-proof layers 231d between the first impact absorbing layer 231a and the impact dispersing layer 231c and between the second impact absorbing layer 231b and the impact dispersing layer 231c, and absorb impact due to explosion. The coupling layer 231e is made of polyurethane, soft urethane, etc. Polyurethane has good durability of abrasion, chemical-resistance, solvent-resistance, and stability against oxygen.

Since the impact absorbing panel 231 has a plurality of layers, the impact absorbing panel 231 resists impact (pressure) due to explosion in the isolation space 220a and prevents fragments of the vehicle from being scattered to the exterior of the isolation space 220a.

The shatter-proof panel 232 includes at least one shatter-proof layer 232a and at least one coupling layer 232b, has a roll shape, and covers an outer side of the impact absorbing panel 231 and the vertical frame 222.

The shatter-proof layer 232a is formed of a plurality of layers and is made of aramid fiber. The coupling layer 232b is positioned between the neighboring shatter-proof layers 232a and couples the neighboring shatter-proof layers 232a with each other.

The shatter-proof panel 232 forms an outer shape of the protection wall 230 and prevents the impact absorbing panel 231 from being scattered when explosion occurs in the isolation space 220a and the impact absorbing panel 231 is damaged. The coupling layer 232b may be made of polyurethane and can absorb impact.

The shatter-proof panel 232 may be removed according to another exemplary embodiment.

The cover 233 covers upper surfaces of the impact absorbing panel 231 and the shatter-proof panel 232. The cover 233 prevents inflow of foreign materials such as rainwater or dust between the impact absorbing panel 231 and the shatter-proof panel 232. The cover 233 may be removed according to another exemplary embodiment.

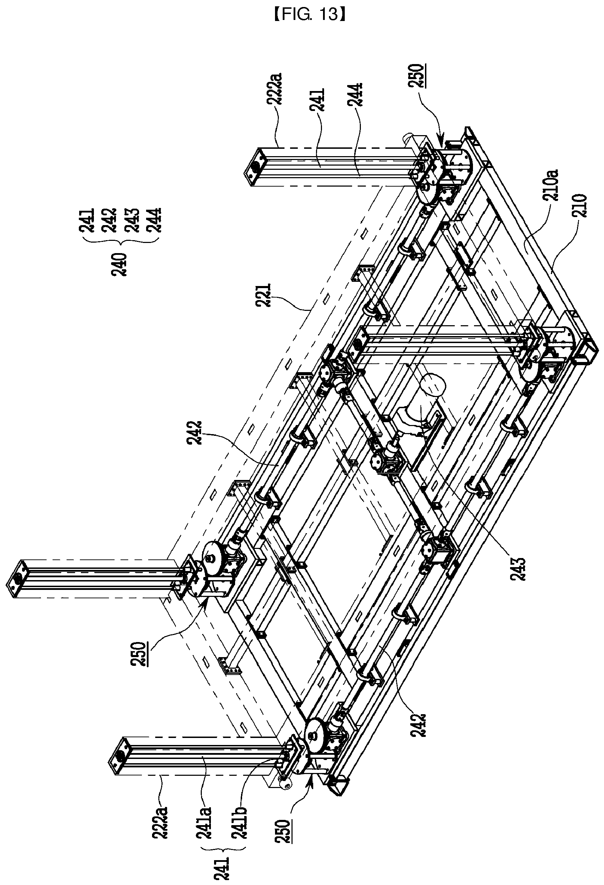

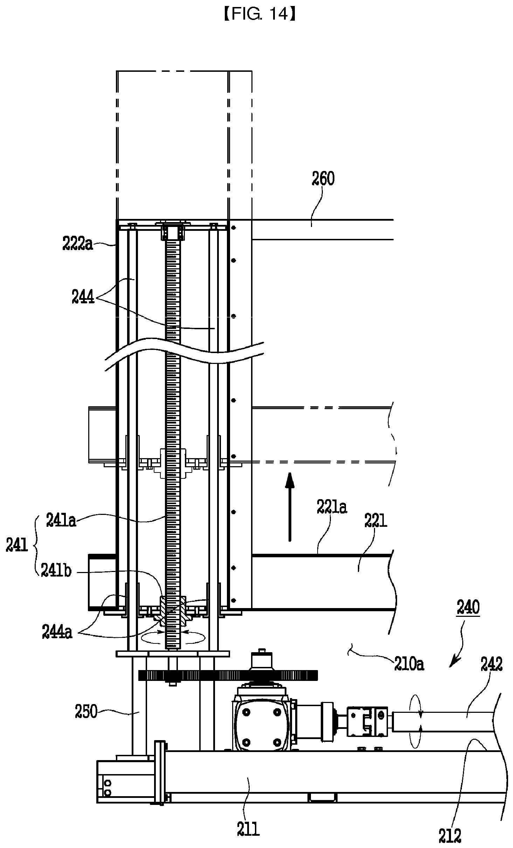

Referring to FIG. 13 and FIG. 14, the driving portion 240 includes at least one lead ball screw 241, a motor 243 and at least one supporting bar 244. The driving portion 240 is disposed on the floor frame 212 and lifts up or falls down the protecting portion 220.

The lead ball screw 241 includes a ball screw 241a and a ball nut 241b.

The ball screw 241a has a predetermined length and is disposed in the main frame 222a. A lower end of the ball screw 241a is rotatably connected to a pedestal 250 disposed on the floor frame 212.

The ball nut 241b is threaded to the ball screw 241a and is connected to the main frame 222a. The ball nut 241b can move upward or downward in a length direction of the ball screw 241a according to a rotating direction of the ball screw 241a.

The motor 243 is disposed on the floor frame 212 and is operably connected to the ball screw 241a through a power delivery portion 242. The power delivery portion 242 includes a power shaft, a speed reduction device and a gear. The ball screw 241a can rotate in a positive direction or a negative direction according to operation of the motor 243. The motor 243 is connected to a controller and is controlled by the controller.

The supporting bars 244 are disposed in parallel with the ball screw 241a and are coupled to the pedestal 250. The supporting bar 244 penetrates through a bushing 244a connected to the main frame 222a. The supporting bar 244 is connected to the ball screw 241a through a bracket of the main frame 222a. The supporting bar 244 supports the ball screw 241a rotating in the main frame 222a so that the ball screw 241a does not shake. The supporting bar 244 and the bushing 244a may be removed according to another exemplary embodiment.

If ball screw 241a rotates in the positive direction, the protecting portion 220 can move upward. The ascending protecting portion 220 is protruded from the ground (please see FIG. 4) so as to form the isolation space 220a enclosing the vehicle.

It is illustrated in the above description and FIG. 13 and FIG. 14 that the driving portion includes the motor and the lead ball screw, but electric cylinders or hydraulic cylinders may be used as the driving portion. Structures of the driving portion may be variously changed according to design scheme.

Referring to FIG. 10 again, the base portion 260 is positioned at an inside of the protecting portion 220, includes at least one supporting member 262 and a base panel 261, and supports the vehicle entering the second inspecting portion 2.

The supporting member 262 has a predetermined length and is positioned on an upper surface of the floor frame 212. The supporting member 262 is disposed in a manner that the supporting member 262 does not overlap with the transversal bar and the longitudinal bar of the horizontal frame 221.

The base panel 261 has a predetermined area and is disposed on the upper surface of the supporting member 262. An upper surface of the base panel 261 may be on the same plane as the ground. The base panel 261 supports the inspected vehicle entering the second inspecting portion 2. If the vehicle is positioned on the base panel 261, the driving portion 240 lifts up the protecting portion 220 so that the protection wall 230 forms the isolation space 220a around the vehicle.

Referring to FIG. 10 again, the getaway preventing portion 22 includes plurality sets of a pair of rollers 22a. The plurality sets of the pair of rollers 22a are disposed apart from each other along a length direction of the base panel 261. The plurality sets of the pair of rollers 22a may be mounted at positions corresponding to front wheels and rear wheels of the vehicle stopping on the vehicle stop position. It is not illustrated in the drawings, but the plurality sets of the pair of rollers 22a may be continuously disposed along the length direction of the base panel 261. The plurality sets of the pair of rollers 22a may support the wheels of the inspected vehicle.

In a case that the plurality sets of the pair of rollers 22a are disposed apart from each other, a distance between the pair of rollers 22a supporting the front wheel and the pair of rollers 22a supporting the rear wheel may be adjusted.

The pair of rollers 22a can rotates freely when the vehicle is inspected and can be fixed when the inspection of the vehicle is finished. If the wheels of the vehicle rotate in a free-rotation state of the rollers 22a, the rollers 22a can rotate with the wheels of the vehicle. Therefore, the wheels of the vehicle idle at the same position and the vehicle cannot get away.

At least a portion of an outer circumference of the rollers 22a is protruded from the upper surface of the base panel 261. In this case, guiding panels 22ba for guiding the wheels of the vehicle on the rollers 22a may be disposed at both sides of the rollers 22a.

Referring to FIG. 1 and FIG. 4 again, the detecting portion of vehicular inner state 98 is connected to the control portion and is disposed on the base panel 261. The detecting portion of vehicular inner state 98 includes a robot arm 23a disposed on a side portion of the base panel 261 and a sensor (not shown) coupled to the robot arm 23a. The sensor can get in the vehicle through the robot arm 23a and can detect the smell (explosive, drug, gas, etc.). The sensor may be an electronic nose sensor.

In a case that the acquisition portion of vehicular inner image 96 is a thermo-graphic camera, the acquisition portion of vehicular inner image 96 may be mounted at the robot arm 23a. Since the robot arm 23a is the same as a well-known robot arm, detailed description thereof will be omitted.

Referring to FIG. 1 and FIG. 10 again, the mounting portion 24 is disposed on the base panel 261. The mounting portion 24 is positioned at an inside of the base panel 261 and is operated to be exposed to the exterior of the base panel 261 when the vehicle enters the second inspecting portion 2. The mounting portion 24 may include an electric cylinder, X-links, or a telescopic actuator.

The mounting portion 24 attaches the acquisition portion of vehicular position information on the vehicle (by attaching a global positioning system (GPS) sensor on the inspected vehicle) so that the position of the vehicle can be traced. The mounting portion 24 can attach various objects other than the GPS sensor on the vehicle. In order for the objects to be attached on the vehicle, the objects includes a permanent magnet, an adhesive layer, etc.

The protection device against vehicle 200 may further include a pump (not shown) disposed on a floor of the underground space. The pump may drain rainwater and wastewater flowing into the underground space. Electrical leakage and malfunction of the driving portion 240 disposed in the underground space due to the rainwater and the wastewater may be prevented by draining the rainwater and the wastewater out the underground space.

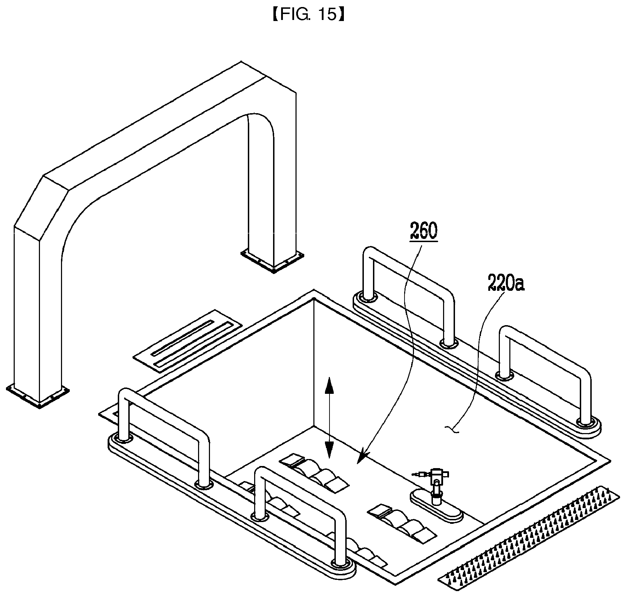

Another exemplary embodiment of the present invention includes majority of constituent elements of the exemplary embodiment explained with reference to FIG. 1 to FIG. 14. According to another exemplary embodiment, the protection floor 221a and the supporting member 262 are removed and the lead ball screw 241 of the driving portion 240 is connected to the base panel 261. The base panel 261 can move upward by means of the driving portion 240. If the vehicle is positioned on the base panel 261, the base panel 261 may move downward into the underground space that is formed to lay the protection device against vehicle 200 (please see FIG. 15). The isolation space 220a may be formed by a perimeter of the underground space. The protection walls 230 are disposed at the perimeter of the underground space. However, the protection walls 230 may be removed according to other exemplary embodiment.

Other constituent elements of the exemplary embodiment illustrated in FIG. 1 to FIG. 14 can be used in another exemplary embodiment.

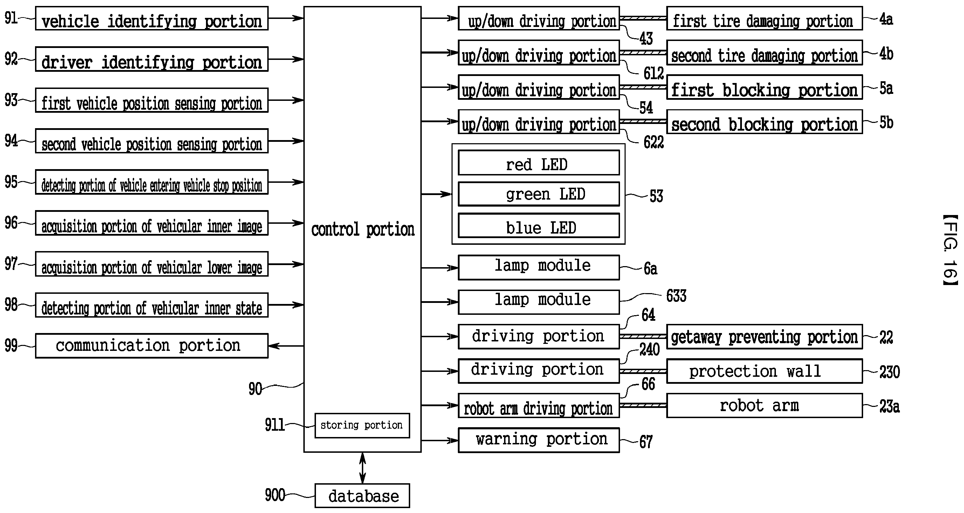

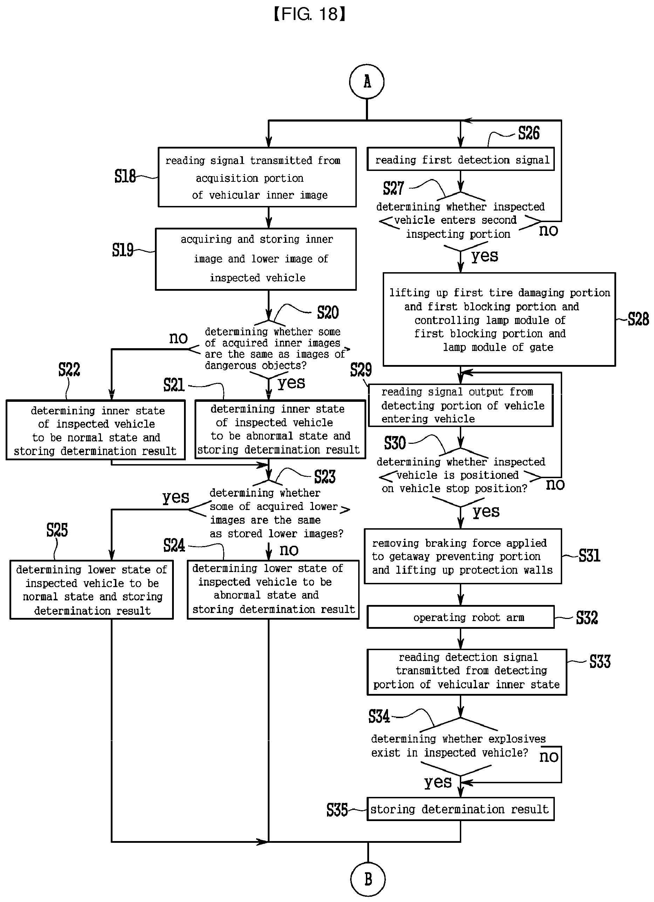

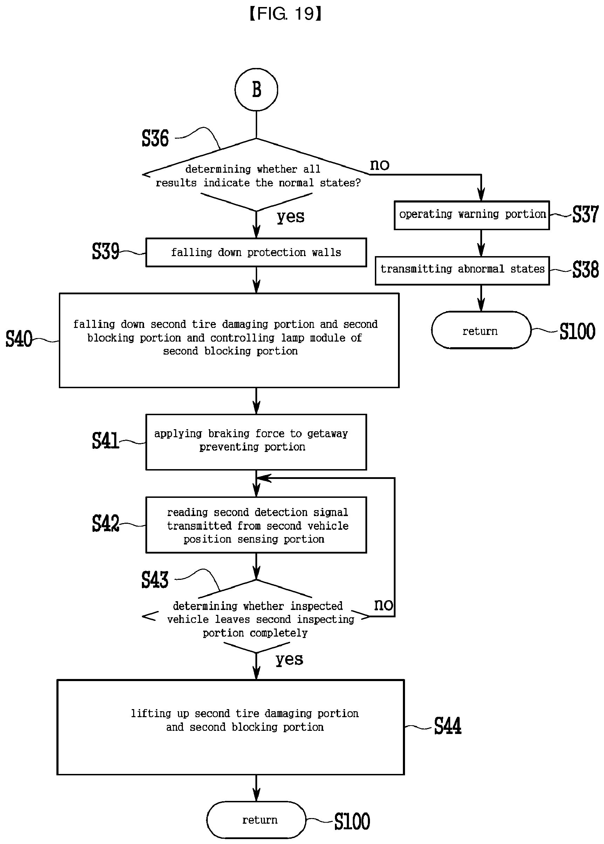

Referring to FIG. 16 to FIG. 19, a method of operating a system of inspecting a vehicle according to an exemplary embodiment of the present invention will be described in detail.

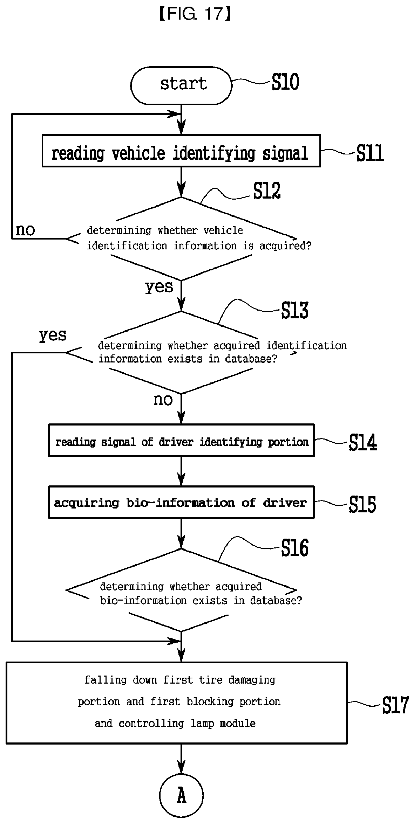

FIG. 16 is a block diagram of an operating system for a system of inspecting a vehicle according to an exemplary embodiment of the present invention; and FIG. 17 to FIG. 19 are flowcharts of a method of operating a system of inspecting a vehicle according to an exemplary embodiment of the present invention.

Referring to FIG. 16, the system of inspecting a vehicle includes the vehicle identifying portion 91 for identifying the vehicle, the driver identifying portion 92 identifying the driver driving the vehicle, a first vehicle position sensing portion 93 for detecting whether the vehicle passes a predetermined point and enters the second inspecting portion 2, a second vehicle position sensing portion 94 for detecting whether the vehicle passes a predetermined point and exits the second inspecting portion 2, a detecting portion of vehicle entering vehicle stop position 95 for detecting whether the vehicle entering the second inspecting portion 2 is positioned on the vehicle stop position of the second inspecting portion 2, the acquisition portion of vehicular inner image 96 for acquiring and outputting the inner image of the vehicle, the acquisition portion of vehicular lower image 97 for acquiring and outputting the lower image of the vehicle, the detecting portion of vehicular inner state 98 for detecting the inner state of the vehicle, a communication portion 99 for communicating with external devices, and a control portion 90 connected to the portions 91 to 99.

In addition, the system of inspecting a vehicle includes a database 900 connected to the control portion 90, the up/down driving portion 43 of the first tire damaging portion 4a connected to the control portion 90, the up/down driving portion 612 of the second tire damaging portion 4b connected to the control portion 90, the up/down driving portion 54 of the first blocking portion 5a connected to the control portion 90, the up/down driving portion 622 of the second blocking portion 5b connected to the control portion 90, the lamp modules 53, 6a, and 633 connected to the control portion 90, the driving portion 64 of the getaway preventing portion 22 connected to the control portion 90, the driving portion 240 of the protection device against vehicle 200 connected to the control portion 90, a robot arm driving portion 66 of the robot arm 23a connecting to the control portion 90, and a warning portion 67 connected to the control portion 90.

The vehicle identifying portion 91, as described above, is configured to identify the vehicle entering the first inspecting portion 1. The vehicle identifying portion 91 reads at least one of an identification number given to the vehicle and a license plate.

In order to read the identification number given to the vehicle, the vehicle identifying portion 91 uses an electronic tag method where the vehicle identifying portion 91 wirelessly communicates with the vehicle and reads the identification number given to the vehicle from a tag attached to the vehicle (for example, RFID(radio frequency identification) method). That is, the vehicle identifying portion 91 may be a tag reader (for example, RFID reader).

In addition, in order to read the license plate of the vehicle, the vehicle identifying portion 91 photographs the license plate of the vehicle by an image acquisition device such as a camera, and outputs the image of the license plate to the control portion 90.

Therefore, the control portion 90 determines whether the vehicle entering the first inspecting portion 1 is a pre-registered vehicle by receiving at least one of the identification number of the vehicle and the image of the license plate from the vehicle identifying portion 91 and comparing the at least one of the identification number of the vehicle and the image of the license plate with data stored in the database 900.

The driver identifying portion 92 is configured to identify a face of the driver of the vehicle entering the first inspecting portion 1. The driver identifying portion 92 acquires at least one of a face image of the driver, a fingerprint image of the driver, and an iris image of the driver (bio-information of the driver), and outputs the bio-information of the driver, i.e., the at least one of the face image of the driver, the fingerprint image of the driver, and the iris image of the driver to the control portion 90.

After that, the control portion 90 compares the bio-information of the driver with the data stored in the database 900 and determines whether the driver of the vehicle is the same as a driver pre-registered in the system of inspecting a vehicle.

Therefore, the driver identifying portion 92 may include a camera for photographing the face of the driver, or a bio-information detector such as fingerprint matching equipment and an iris recognizer that acquires the bio-information such as the fingerprint image and the iris image.

The first vehicle position sensing portion 93 and the second vehicle position sensing portion 94 are configured to detect whether the vehicle passes the predetermined points.

That is, the first vehicle position sensing portion 93 detects whether the vehicle passes the first blocking portion 5a and enters the second inspecting portion 2.

In addition, the second vehicle position sensing portion 94 detects whether the vehicle completing a secondary inspection at the second inspecting portion 2 leaves the second inspecting portion 2 completely.

That is, the first vehicle position sensing portion 93 may be mounted between the first inspecting portion 1 and the second inspecting portion 2, i.e., at the gate 6, and the second vehicle position sensing portion 94 may be mounted in front of the second tire damaging portion 4b, i.e., at a position where the vehicle passes the second tire damaging portion 4b in a forward direction. The first and second vehicle position sensing portions 93 and 94 may include photo sensors including photo diodes or a photo transistors, or loop sensors.

If it is determined from the detection signal transmitted from the first vehicle position sensing portion 93 that the vehicles leaves the first inspecting portion 1 completely and enters the second inspecting portion 2, the control portion 90 lifts up the first tire damaging portion 4a and the first blocking portion 5a from lower portions.

The detecting portion of vehicle entering vehicle stop position 95 detects whether the vehicle entering the second inspecting portion 2 is positioned on a predetermined position, i.e., a position where the protection walls can be lifted up.

The detecting portion of vehicle entering vehicle stop position 95 may be mounted at the rear of the second blocking portion 5b, in further detail, adjacent to the getaway preventing portion 22 where the front wheels of the vehicle is positioned. The detecting portion of vehicle entering vehicle stop position 95 may be a photo sensor.

Therefore, if it is determined from detecting the detection signal transmitted from the portion of vehicle entering vehicle stop position 95 that the vehicle is positioned on the vehicle stop position of the base panel 261, the control portion 90 outputs a corresponding control signal to the driving portion 240 so as to lift up the protection walls 230 until the protection walls 230 rises to a predetermined height.

In addition, if the inner image of the vehicle is acquired by the acquisition portion of vehicular inner image 96 and is output to the control portion 90, the control portion 90 compares the inner image of the vehicle with dangerous object images stored in the database 900 and determines whether dangerous objects such as explosives and guns exist in the vehicle.

In addition, the acquisition portion of vehicular lower image 97 acquires the lower image of the vehicle passing through the gate 6 and outputs the lower image to the control portion 90.

The control portion 90 compares the lower image of the vehicle transmitted from the acquisition portion of vehicular lower image 97 with a lower image of the same vehicle model (i.e., a lower image of a reference vehicle) stored in the database 900 and determines whether additional objects such as explosives are attached to a lower portion of the vehicle.

The communication portion 99 is a communication module which enables the operating system to communicate with the external devices in a wired manner or wireless manner.

The control portion 90 is a controller which controls the operating system. As described above, the control portion 90 determines conditions of the vehicle by using the signals transmitted from the constituent elements 91 to 98, and controls operation of the corresponding constituent elements.

The control portion 90 is provided with a storing portion 911 in which data and signals generated when operating the system or data that are necessary to operate the system are stored. However, the storing portion 911 may be a separate element from the control portion 90. That is, the storing portion 911 may be mounted at the exterior of the control portion 90 and be connected to the control portion 90.

The database 900 is a storage medium in which information and data for operating the system are stored.

In the present exemplary embodiment, the database 900 stores the identification numbers and the images of the license plates of the vehicles registered in the system of inspecting a vehicle, the lower image of each vehicle (i.e., the lower image), the bio-information of the registered drivers such as the fingerprint information and the face images of the registered drivers, and the images of the dangerous objects such as guns and explosives.

The up/down driving portions 43 and 612 are controlled by a control signal transmitted from the control portion 90 to lift up or fall down the needle panels 42 of the first and second tire damaging portions 4a and 4b.

The up/down driving portions 54 and 622 of the first and second blocking portions 5a and 5b are controlled by a control signal transmitted from the control portion 90 to lift up or fall down the up/down members 52.

The lamp modules 53, 6a, and 633 respectively include a red light emitting diode (LED), a green light emitting diode and a blue light emitting diode. The lamp modules 53, 6a, and 633 change color of light according to operation states of the first and second blocking portions 5a and 5b.

Therefore, the lamp module 53 of the first blocking portion 5a and the lamp module 6a of the gate 6 change the color of the light according to the operation state of the first blocking portion 5a, and the lamp module 633 of the second blocking portion 5b changes the color of the light according to the operation state of the second blocking portion 5b.

According to the present exemplary embodiment, if the up/down members 52 of the first and second blocking portions 5a and 5b are located at their highest position, the lamp modules 53 and 633 turn on the red light emitting diode. On the contrary, if the up/down members 52 of the first and second blocking portions 5a and 5b are located at their lowest position, the lamp modules 53 and 633 turn on the green light emitting diode.

If the up/down members 52 of the first and second blocking portions 5a and 5b are moving from the highest position to the lowest position or from the lowest position to the highest position, the lamp modules 53 and 633 turn on the blue light emitting diode.

Therefore, the driver of the vehicle checks the color of the light turned on by the lamp modules 53, 6a, and 633 and determines drive or stop of the vehicle.

The driving portion 64 of the getaway preventing portion 22 controls to rotate the rollers 22a of the getaway preventing portion 22 or not. If the driving portion 64 is operated by the control portion 90, a brake for stopping rotation of the rollers 22a is released and the rollers 22a can rotate.

Therefore, if it is determined that the vehicle positioned at the second inspecting portion 2 is an abnormal vehicle having dangerous objects, the rollers 22a of the getaway preventing portion 22 contacting with the wheels of the vehicle are rotated so as for the vehicle not to move.

The driving portion 64 may include an electric brake for applying braking force to the rollers 22a. The electric brake may include an electromagnet that is controlled by a signal transmitted from the control portion 90.

The driving portion 240 is controlled by the control portion 90 to lift up or fall down the protection walls 230 and may be a motor.

The robot arm driving portion 66 moves the robot arm 23a along a predetermined path to get the robot arm 23a into the vehicle positioned in the second inspecting portion 2. The detecting portion of vehicular inner state 98 and the acquisition portion of vehicular inner image 96 mounted at the robot arm 23a move to predetermined positions and execute predetermined operation.

For example, the detecting portion of vehicular inner state 98 analyzes air in the vehicle to determine whether explosives exist in the vehicle, and the acquisition portion of vehicular inner image 96 acquires the inner image of the vehicle using a thermo-graphic camera to determine whether guns, explosives or hidden occupants exist in the vehicle.

The warning portion 67 generates warning sounds by control of the control portion 90 if the state of the vehicle is determined to be abnormal state.

At least one of the warning portions 67 is mounted around the system of inspecting a vehicle and causes surrounding people to recognize danger of the inspected vehicle quickly.

Referring to FIG. 17 to FIG. 19, a method of operating the system of inspecting a vehicle will be described.

Firstly, electric power is supplied to each constituent elements of the system of inspecting a vehicle and operation of the system starts.

Therefore, the control portion 90 of the system also starts at step S10.

At this time, initial positions of the first and second tire damaging portions 4a and 4b and the first and second blocking portions 5a and 5b are ascending positions by predetermined heights. At this state, the plurality of needles 44 is exposed from the ground and the blocking portions 5a and 5b moves upward to the predetermined heights.

The lamp modules 53 and 6a turn on the red light emitting diodes.

In addition, initial state of the getaway preventing portion 22 is non-rotatable state and initial positions of the protection walls 230 are descending positions by predetermined depths.

If the operation of the control portion 90 starts, the control portion 90 reads a vehicle identifying signal transmitted from the vehicle identifying portion 91 at every predetermined time at step S11. The control portion 90 determines whether the inspected vehicle is positioned on a predetermined position of the first inspecting portion 1 and at least one of the identification number given to the inspected vehicle and the image of the license plate is acquired at step S12.

Herein, the identification number of the vehicle and the image of the license plate are called vehicle identification information. The predetermined position of the first inspecting portion 1 is a position where the vehicle identification information of the inspected vehicle can be acquired, and is changed according to a mounting position of the vehicle identifying portion 91.

If the inspected vehicle does not exist in the first inspecting portion 1 or is not positioned on the predetermined position of the first inspecting portion 1, the identification number of the inspected vehicle or the image of the license plate cannot be acquired from the signal output from the vehicle identifying portion 91.

Therefore, if the vehicle identification information is not acquired from the vehicle identifying portion 91, the control portion 90 returns to the step S11 at every predetermined time and reads the vehicle identifying signal output from the vehicle identifying portion 91 because the inspected vehicle is not positioned on the predetermined position of the first inspecting portion 1.

If the inspected vehicle is positioned on the predetermined position and the identification information which is the at least one of the image of the license plate and the identification number is acquired at the step S12, the control portion 90 stores the identification information in the storing portion 911 and compares the acquired identification number with the identification number stored in the database 900. If the image of the license plate is acquired, the control portion 90 compares the acquired image of the license plate with the image of the license plate stored in the database 900. Thereby, the control portion 90 determines whether the inspected vehicle identified by the vehicle identifying portion 91 is the vehicle registered in the system of inspecting a vehicle at step S13.

For example, it is determined whether the acquired image of the license plate of the inspected vehicle is the same as the image of the license plate of the registered vehicle by comparing a pixel value (for example, tone value) of a pixel in the acquired image of the license plate with a pixel value of a pixel in the registered image of the license plate at the same position.

If the at least one of the identification number and the image of the license plate of the inspected vehicle is the same as the at least one of the identification number and the image of the license plate of the registered vehicle, it is determined that the inspected vehicle in the first inspecting portion 1 is the registered vehicle.

Therefore, the control portion 90 allows the inspected vehicle to enter the second inspecting portion 2.

It is illustrated in this exemplary embodiment that the signal output from the vehicle identifying portion 91 is read at every predetermined time in order to acquire the identification information, but a vehicle position sensing portion and a vehicle stop detecting portion mounted at a predetermined position of the first inspecting portion 1 may be used to acquire the identification information according to another exemplary embodiment.

That is, if the control portion 90 reads a signal output from the vehicle position sensing portion periodically and determines that the inspected vehicle enters the first inspecting portion 1, the control portion 90 reads a signal output from the vehicle stop detecting portion mounted at the predetermined position of the first inspecting portion 1 and determines whether the inspected vehicle stops at the predetermined position of the first inspecting portion 1.

If it is determined that the inspected vehicle stops at the predetermined position of the first inspecting portion 1, the control portion 90 operates the vehicle identifying portion 91 to acquire the identification information using the signal output from the vehicle identifying portion 91.

At this time, the vehicle position sensing portion and the vehicle stop detecting portion may be a photo sensor or a loop sensor.

If the identification number or the image of the license plate of the inspected vehicle is not the same as the identification number or the image of the license plate of the registered vehicle, the control portion 90 determines that the inspected vehicle is not the vehicle registered in the system of inspecting a vehicle.

Therefore, the control portion 90 operates the driver identifying portion 92 and reads the signal transmitted from the driver identifying portion 92 at step S14. The control portion 90 acquires the bio-information of the driver, i.e., at least one of the face image, the fingerprint image and the iris image and stores the bio-information of the driver in the storing portion 911 at step S15.

If the bio-information, i. e., the at least one of the face image, the fingerprint image and the iris image of the driver is acquired, the control portion 90 compares the acquired bio-information with the bio-information stored in the database 900 and determines whether the acquired bio-information exists in the database 900 at step S16.

If the acquired bio-information exists in the database 900 at the step S16, the control portion 90 determines that the driver of the inspected vehicle is the driver registered in the system of inspecting a vehicle. At this time, the control portion 90 determines that the acquired bio-information exists in the database 900 if at least one bio-information among a plurality of bio-information such as the face image, the fingerprint image and the iris image exists in the database.

If it is determined that the driver of the inspected vehicle is the registered driver at the step S16, the control portion 90 allows the inspected vehicle to enter the second inspecting portion 2.

In order for the inspected vehicle to enter the second inspecting portion 2, the control portion 90 controls the up/down driving portion 43 and the first blocking portion driving portion 621 to fall down the first tire damaging portion 101 and the first blocking portion 5a which are exposed from the ground at step S17.

At this time, the control portion 90 controls the first and second lamp modules 631 and 632 which are operated with the first tire damaging portion 101 and the first blocking portion 5a at the step S17.

Therefore, the control portion 90 controls the first and second lamp modules 631 and 632 to turn off the red light emitting diode and turn on the blue light emitting diode. If the first tire damaging portion 101 and the first blocking portion 5a are completely fallen down, the green light emitting diode is turned on.

The first tire damaging portion 4a and the first blocking portion 5a are completely fallen down by control of the control portion 90 such that the needles 44 and the up/down member 52 are positioned under the ground. In addition, color of light of the lamp modules 53 and 6a is sequentially changed from red to blue and from blue to green. After that, the inspected vehicle moves from the first inspecting portion 1 to the second inspecting portion 2 by manipulation of the driver.

When the control portion 90 controls the first tire damaging portion 4a and the first blocking portion 5a to move downward, the control portion 90 operates the gate 6 and the acquisition portion of vehicular inner image 96 and the acquisition portion of vehicular lower image 97 positioned at the gate 6.

If the acquisition portion of vehicular inner image 96 is not mounted at the gate 6 and is attached to the robot arm 22a mounted in the second inspecting portion 2, the control portion 90 does not operate the acquisition portion of vehicular inner image 96 at this step.

After the control portion 90 controls the first tire damaging portion 4a and the first blocking portion 5a to move downward, the control portion 90 reads the image signal transmitted from the acquisition portion of vehicular inner image 60 and the acquisition portion of vehicular lower image 97 to acquire the inner images and the lower images of the inspected vehicle and stores the inner images and the lower images in the storing portion 911 at steps S18 and S19.

The control portion 90 compares the acquired inner images with the images of the dangerous objects stored in the database 900 and determines whether some of the acquired inner images are the same as the images of the dangerous objects at step S20.

If some of the acquired inner images of the inspected vehicle are the same as the images of the dangerous objects, the control portion 90 determines that guns or explosives corresponding to the images of the dangerous objects stored in the database 900 exist in the inspected vehicle.

Therefore, the control portion 90 determines the inner state of the inspected vehicle to be the abnormal state where the dangerous objects such as guns or explosives exist in the inspected vehicle and stores a determination result in the storing portion 911 at step S21.

If the acquired inner images of the inspected vehicle are different from the images of the dangerous objects stored in the database 900, the control portion 90 determines the inner state of the inspected vehicle to be the normal state where the dangerous objects do not exist in the inspected vehicle and stores the determination result in the storing portion 911 at step S22.

After that, the control portion 90 compares the acquired lower images of the inspected vehicle with the lower images stored in the database 900 and determines whether some of the acquired lower images are the same as the lower images stored in the database 900 at step S23.

If the acquired lower images of the inspected vehicle are different from the lower images in the database 900, the control portion 90 determines the lower state of the inspected vehicle to be the abnormal state where explosives are mounted at a lower portion of the inspected vehicle.

That is, if the acquired lower images of the inspected vehicle are different from the lower images in the database 900, the control portion 90 determines the lower state of the inspected vehicle to be the abnormal state and stores the determination result in the storing portion 911 at step S24.

If some of the acquired lower images of the inspected vehicle are the same as the lower images in the database 900, the control portion 90 determines the lower state of the inspected vehicle to be the normal state where any of additional objects is not mounted at the lower portion of the vehicle, and stores the determination result in the storing portion 911 at step S25.

That is, the control portion 90 compares the acquired inner images and the acquired lower images with corresponding images stored in the database 900 and determines the inner state and the lower state of the vehicle.

As described above, comparison of the images are executed by comparing pixel values at the same position.

In addition, after the first tire damaging portion 4a and the first blocking portion 5a are fallen down, the control portion 90 reads a first detection signal transmitted from the first vehicle position sensing portion 93 at step S26, and determines whether the inspected vehicle enters the second inspecting portion 2 at step S27.

If it is determined from the first detection signal that the inspected vehicle passes a mounting position and enters the second inspecting portion 2 at the step S27, the control portion 90 outputs control signals to the up/down driving portion 43 of the first tire damaging portion 4a and the up/down driving portion 54 of the first blocking portion 5a to lift up the first tire damaging portion 4a and the first blocking portion 5a and controls the lamp module 53 of the first blocking portion 5a and the lamp module 6a of the gate 6 at step S28.

If the inspected vehicle leaves the first inspecting portion 1 completely, the first tire damaging portion 4a and the first blocking portion 5a return to their initial positions and primary inspection of another inspected vehicle entering the first inspecting portion 1 is executed.

In addition, after the lamp module 53 of the first blocking portion 5a and the lamp module 6a of the gate 6 turn off the green LED and turn on the blue LED, the lamp module 53 of the first blocking portion 5a and the lamp module 6a of the gate 6 turn on the red LED, which indicates the vehicle cannot enter the second inspecting portion 2.

The control portion 90 reads the signal output from the detecting portion of vehicle entering vehicle stop position 95 and determines whether the inspected vehicle entering the second inspecting portion 2 is positioned on a predetermined position of the second inspecting portion 2, i. e., the vehicle stop position at steps S29 and S30.

If the inspected vehicle passing the first inspecting portion 1 is positioned on the predetermined position of the second inspecting portion 2 at the step S30, the control portion 90 outputs control signals to the getaway preventing portion 22 and the driving portion 240 at step S31.

Therefore, the braking force applied to the getaway preventing portion 22 is removed so that the rollers 22a of the getaway preventing portion 22 rotate in an opposite direction to a rotating direction of the wheels when the wheels of the inspected vehicle rotate. In addition, the protection walls 230 are lifted up.

Since the protection walls 230 enclose the inspected vehicle positioned in the second inspecting portion 2 by control of the control portion 90 as shown in FIG. 4, inspectors and surroundings of the inspecting portion can be protected although the explosives mounted at the inspected vehicle explode or occupants in the inspected vehicle shoot the guns.

In addition, although the inspected vehicle rotates the front wheels or the rear wheels in order to get away, the rollers 22a rotate with the wheels. Therefore, the wheels of the inspected vehicle idle and the inspected vehicle cannot get away.

If the getaway preventing portion 22 and the protection walls 230 are operated, the control portion 90 outputs a driving signal to the robot arm driving portion 66 and causes the robot arm 23a to move along the predetermined path and to get in the inspected vehicle enclosed by the protection walls 230 at step S32.

If the acquisition portion of vehicular inner image 96 is mounted at the robot arm 23a, the control portion 90 operates the robot arm driving portion 66 and the acquisition portion of vehicular inner image 96.

After that, the control portion 90 reads a detection signal transmitted from the detecting portion of vehicular inner state 98 mounted at the robot arm 23a and determines whether the explosives exist in the inspected vehicle at steps S33 and S34.

As described above, the detecting portion of vehicular inner state 98 includes the electronic nose sensor. The electronic nose sensor analyzes atmospheric components and outputs the detection signal according to whether explosive materials exist in the atmosphere.

The control portion 90 determines from the detection signal output from the detecting portion of vehicular inner state 98 whether the explosives exist in the inspected vehicle and stores the determination result in the storing portion 911 at step S35.

If the acquisition portion of vehicular inner image 96 is mounted at the robot arm 23a, the control portion 90 reads the image signal output from the acquisition portion of vehicular inner image 96 as well as the detection signal output from the detecting portion of vehicular inner state 98 and acquires and stores in the storing portion 911 the inner images of the inspected vehicle.

After that, the control portion 90 compares the acquired inner images with the images of the dangerous objects stored in the database 900 to determine whether the dangerous objects exist in the inspected vehicle and stores the determination result in the storing portion 911 (similar to the step S20 to the step S25).

If the signals transmitted from the acquisition portion of vehicular inner image 96, the acquisition portion of vehicular lower image 97 and the detecting portion of vehicular inner state 98 are completely analyzed, the control portion 90 reads the determination results from the storing portion 911 and determines whether any of the abnormal states exists, i. e., the dangerous objects exist in the inspected vehicle, any object is attached at the lower portion of the inspected vehicle, or the explosives existing in the inspected vehicle is detected at step S36.

If any of the abnormal states exists at the step S36, the control portion 90 outputs a signal to the warning portion 67 to operate the warning portion 67 at step S37. The warning sounds are output by the warning portion 67 such that dangerousness of the inspected vehicle is notified. Therefore, quick evacuation is conducted and the inspected vehicle is scrutinized by the inspector.

In addition, the control portion 90 transmits the abnormal states of the inspected vehicle through the communication portion 99 to external terminals such as a control system, a management server or a portable terminal at step S38 such that the manager executes emergency processes.

If the inspected vehicle is determined to be the normal state at the step S36, the control portion 90 outputs a control signal to the driving portion 240 to reinstate the protection walls 230 to the initial state at step S39.

Therefore, the protection walls 230 enclosing the second inspecting portion 2 are fallen down under the ground.

In order for the inspected vehicle finishing the secondary inspection to leave the second inspecting portion 2, the control portion 90 outputs control signals to the second tire damaging portion 4b and the second blocking portion 5b such that the needle of the second tire damaging portion 4b and the second blocking portion 5b move downward under the ground at step S40.

At this time, the control portion 90 controls the lamp module of the second blocking portion 5b which is attached to the second blocking portion 5b and is operated with the second blocking portion 5b at the step S40.

Therefore, the lamp module of the second blocking portion 5b turns off the red LED and turns on the blue LED. If the up/down member of the second blocking portion 5b moves downward to its lowest position, the lamp module of the second blocking portion 5b turns on the green LED.

If the second tire damaging portion 4b and the second blocking portion 5b are fallen down and the inspected vehicle can leave the second inspecting portion 2, the control portion 90 outputs a control signal to the driving portion 64 of the getaway preventing portion 22 such that the braking force is applied to the getaway preventing portion 22 at step S41.

Therefore, the electric brake of the getaway preventing portion 22 is operated and the rollers 22a cannot rotate. At this state, the inspected vehicle can move.

Therefore, the driver drives the inspected vehicle to leave the second inspecting portion 2.

After that, the control portion 90 reads a second detection signal transmitted from the second vehicle position sensing portion 94 and determines whether the inspected vehicle leaves the second inspecting portion 2 completely at steps S42 and S43.

If it is determined from the second detection signal of the second vehicle position sensing portion 94 that the inspected vehicle leaves the second inspecting portion 2 completely at the step S43, the control portion 90 outputs control signals to the up/down driving portion 612 of the first tire damaging portion 4b and the up/down driving portion 622 of the second blocking portion 5b so as to lift up the second tire damaging portion 4b and the second blocking portion 5b at step S44.

If it is determined from the second detection signal of the second vehicle position sensing portion 94 that the inspected vehicle does not leave the second inspecting portion 2 completely, the control portion 90 continuously reads the second detection signal of the second vehicle position sensing portion 94 and determines whether the inspected vehicle leaves the second inspecting portion 2 completely at the step S43.

In the present exemplary embodiment, in order to control the up/down driving portions 43 and 621 of the first and second tire damaging portions 4a and 4b, the up/down driving portions 54 and 622 of the first and second blocking portions 5a and 5b, the driving portion 240 of the protection device against vehicle 200, and the robot arm driving portion 66, the control portion 90 may transmit the corresponding signals to the corresponding driving portions 43, 621, 54, 622, 240, and 66 for a predetermined time or may use position sensors (for example, photo sensors) for detecting positions of the first and second tire damaging portions 4a and 4b, the first and second blocking portions 5a and 5b, the protection walls 230, and the robot arm 23a.

Meanwhile, the mounting portion 24 positioned in the second inspecting portion 2 moves upward from the base panel 261 and attaches the GPS sensor on the lower portion of the inspected vehicle by control of the control portion 90.

Although the results of the primary and secondary inspections in the first and second inspecting portions 10 and 20 are normal, the manager may suspect the inspected vehicle. In this case, the manager switches on a driving switch.

If a signal of the driving switch is transmitted to the control portion 90, the control portion 90 raises the mounting portion 24 toward the inspected vehicle and allows the mounting portion 24 to attach the GPS sensor on the lower portion of the inspected vehicle. Therefore, a position of the inspected vehicle is traced.

In another exemplary embodiment, the protection device against vehicle 200 may fall down the inspected vehicle under the ground and prevent the fragments of the inspected vehicle due to explosion from being scattered.

In addition, the control portion 90 of the system of inspecting a vehicle can transmit inspection result (i.e., the information of the driver, the information of the vehicle, the images acquired during inspection) to the external terminals through the communication portion 99 in wired or wireless manner periodically or whenever the inspected vehicle is inspected.

Also the following embodiments are provided:
1. A protection device against vehicle comprising:
   a base portion on which the vehicle is positioned;
   a protecting portion disposed along a perimeter of the base portion and positioned under the base portion;
   a driving portion configured to lift up or fall down the base portion or the protecting portion; and
   a frame portion supporting the base portion and the protecting portion.
2. The protection device of embodiment 1, wherein the driving portion comprises:
   a plurality of lead ball screws connected to the base portion or the protecting portion;
   a motor operably connected to the plurality of lead ball screws; and
   a plurality of supporting bars disposed in parallel with the lead ball screw and guiding the base portion or the protecting portion which lifts up or falls down.
3. The protection device of embodiment 2, wherein the protecting portion comprises:
   a horizontal frame connected to a ball nut of the lead ball screw;
   a plurality of vertical frames disposed vertically from edges of the horizontal frame; and
   protection walls coupled to the plurality of vertical frames;
   wherein the protection walls include:
   a plurality of impact absorbing panels disposed between neighboring vertical frames; and
   a shatter-proof panel disposed at an exterior of the plurality of impact absorbing panels and the vertical frame.
4. The protection device of embodiment 3, wherein each of the impact absorbing panels comprises:
   first and second impact absorbing layers disposed apart from each other;
   an impact dispersing layer disposed between the first and second impact absorbing layers;
   a shatter-proof layer disposed at both sides of the impact dispersing layer; and
   a coupling layer coupling the first impact absorbing layer, the impact dispersing layer, the shatter-proof layer and the second impact absorbing layer with each other.
5. The protection device of embodiment 4, wherein the shatter-proof panel comprises:
   a plurality of shatter-proof layers having elastically reinforcing force and preventing the impact absorbing panel from being shattered; and
   a coupling layer disposed between the plurality of shatter-proof layers and coupling the neighboring shatter-proof layers with each other.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A system of inspecting a vehicle, comprising:
a first tire damaging portion mounted at a ground of an exit portion of a first inspection road to be movable upward or downward and damaging a tire of an inspected vehicle;
a first blocking portion positioned next to the first tire damaging portion and being movable upward or downward;
a vehicle identifying portion acquiring and outputting identification information on the inspected vehicle positioned on the first inspection road;
a driver identifying portion acquiring and outputting bio-information on a driver of the inspected vehicle;
a control portion connected to the vehicle identifying portion and the driver identifying portion; and
a database connected to the control portion,
wherein the control portion, when the identification information output and transmitted from the vehicle identifying portion is the same as identification information stored in the database or the bio-information output and transmitted from the driver identifying portion is the same as bio-information stored in the database, controls the first tire damaging portion and the first blocking portion to move downward under the ground such that the inspected vehicle positioned on the first inspection road leave the first inspection road.

2. The system of claim 1, wherein the vehicle identifying portion is a tag reader which communicates with the inspected vehicle and receives the identification information from the inspected vehicle or an image acquisition device which photographs a license plate of the inspected vehicle and acquires an image of the license plate.

3. The system of claim 1, wherein the bio-information acquired by the driver identifying portion includes at least one of a face image, a fingerprint image and an iris image of the driver.

4. The system of claim 1, further comprising:
a protection device against vehicle positioned on a second inspection road formed in a row with the first inspection road, wherein protection walls positioned under the second inspection road are lifted up and enclose the inspected vehicle or the protection device falls the inspected vehicle down into an underground space formed under the second inspection road; and
a detecting portion of vehicle entering vehicle stop position which detects whether the inspected vehicle is positioned on a vehicle stop position of the second inspection road and outputs a detection signal corresponding thereto,
wherein the control portion, if the inspected vehicle is determined to be positioned on the vehicle stop position of the second inspection road, lifts the protection walls of the protection device against vehicle to enclose the inspected vehicle or falls the inspected vehicle down into the underground space formed under the second inspection road.

5. The system of claim 4, further comprising:
an acquisition portion of vehicular lower image connected to the control portion, disposed between the first inspection road and the second inspection road, and acquiring and outputting a lower image of the inspected vehicle;
an acquisition portion of vehicular inner image connected to the control portion and acquiring and outputting an inner image of the inspected vehicle; and
a detecting portion of vehicular inner state connected to the control portion, detecting whether an explosive exists in the inspected vehicle, and outputting a detection signal corresponding thereto,
wherein the control portion, if the lower image acquired by the acquisition portion of vehicular lower image exists in the database, the inner image acquired by the acquisition portion of vehicular inner image is different from an image of a dangerous object stored in the database, and the explosive in the vehicle is not detected by the detecting portion of vehicular inner state, releases operation of the protection device against vehicle and reinstates the protection device against vehicle to an initial state so as to fall down the protection walls or lift up the inspected vehicle that was fallen down.

6. The system of claim 5, further comprising:
a second tire damaging portion mounted at a ground of an exit portion of the second inspection road to be movable upward or downward and damaging the tire of the inspected vehicle; and
a second blocking portion positioned next to the second tire damaging portion and being movable upward or downward,
wherein the control portion, when the protection device against vehicle is reinstated to the initial state, controls the second tire damaging portion and the second blocking portion to move downward under the ground such that the inspected vehicle positioned on the second inspection road leave the second inspection road.

7. A method of operating a system of inspecting a vehicle, comprising:
reading identification information output and transmitted from a vehicle identifying portion;
determining whether the identification information is the same as identification information stored in a storage medium;
moving a first tire damaging portion and a first blocking portion downward under a ground and causing an inspected vehicle positioned on a first inspection road to leave the first inspection road if the identification information output from the vehicle identifying portion is the same as the identification information stored in the storage medium;
reading, if the identification information output from the vehicle identifying portion is different from the identification information stored in the storage medium, bio-information of a driver output from a driver identifying portion,
determining whether the identified bio-information of the driver is the same as bio-information of the driver stored in the storage medium; and
moving the first tire damaging portion and the first blocking portion downward under the ground and causing the inspected vehicle positioned on the first inspection road to leave the first inspection road if the identified bio-information of the driver is the same as the bio-information of the driver stored in the storage medium.

8. The method of claim 7, further comprising:
determining whether the inspected vehicle is positioned on a vehicle stop position of a second inspection road by reading a detection signal output from a detecting portion of vehicle entering vehicle stop position; and
operating protection walls of a protection device against vehicle to enclose the inspected vehicle or falling the inspected vehicle down into an underground space formed under the ground if the inspected vehicle is positioned on the vehicle stop position of the second inspection road.

9. The method of claim 8, further comprising:
reading a lower image of the inspected vehicle output from an acquisition portion of vehicular lower image;
determining whether a lower image which is the same as the lower image exists in the storage medium;
reading an inner image of the inspected vehicle output from an acquisition portion of vehicular inner image;
determining whether the inner image is the same as an image of a dangerous object stored in the storage medium;
reading a detection signal output from a detecting portion of vehicular inner state and determining whether an explosive is detected in the inspected vehicle; and
releasing operation of the protection device against vehicle so as to fall down the protection walls of the protection device against vehicle or lift up the inspected vehicle that was fallen down if the lower image which is the same as the lower image acquired by the acquisition portion of vehicular lower image exits in the storage medium, the inner image of the inspected vehicle acquired by the acquisition portion of vehicular inner image is different from the image of the dangerous object, and the explosive is not detected in the inspected vehicle.

10. The method of claim 9, further comprising moving a second tire damaging portion and a second blocking portion downward under the ground and causing the inspected vehicle positioned on the second inspection road to leave the second inspection road if the operation of the protection device against vehicle is released where the inspected vehicle positioned on the second inspection road is enclosed by the protection walls or is fallen down into a protecting space.
